# EUROPEAN PATENT SPECIFICATION

(11) **EP 4 600 512 B1**
(45) Date of publication and mention of the grant of the patent: **28.01.2026**
(21) Application number: 24211994.9
(22) Date of filing: 11.11.2024
(51) Int. Cl.: F16B 27/00

(54) **COLLATED-SCREW-BAND ASSEMBLY HAVING SHOULDER WASHERS**
SCHRAUBENBANDANORDNUNG MIT SCHULTERSCHEIBEN
ENSEMBLE BANDE-VIS AYANT DES RONDELLES D'ÉPAULEMENT

(30) Priority: 13.03.2024 TW 113109186
(43) Date of publication of application: 13.08.2025
(73) Proprietor: Guangzhe Enterprise Co., Ltd., Kaohsiung City (TW)
(72) Inventor: SU, Fu Cheng, Kaohsiung City (TW)
(74) Representative: Becker, Eberhard

(56) References cited:
- EP-A1- 3 757 407
- US-A1- 2004 179 919

## Description

### 1. Field of the Invention

The present invention relates to a collated-screw-band assembly having shoulder washers and increasing convenience of taking screws.

### 2. Description of Related Art

Screws are fasteners widely used in mechanism, architecture, or furniture to fasten multiple objects together. To achieve better waterproof and leakproof effects and to increase fastening stability when fastening objects with a screw, a washer is put on the screw. When the screw is fastened to the objects, the washer is abutted by a head portion of the screw and the adjacent object, so the washer securely fills a gap between the screw and said object. At the same time, the washer abuts the head portion of the screw to make the screw more stable and unlikely to loosen, therefore achieving good waterproof and leakproof effects and good fastening stability.

However, with an increasing amount of the screws to be fastened, the personnel have to take one screw each time from a pile of screws, put a washer on the screw, and then fasten the screw. It is inconvenient to go through the whole process and consumes more time.

Therefore, a conventional collated-screw-band assembly is provided, which comprises a loading band, multiple washers and multiple screws. The loading band has multiple positioning holes and multiple positioning clips. The multiple positioning clips are foldable and surround each one of the multiple positioning holes. The multiple washers are respectively mounted at the multiple positioning holes of the loading band. Each one of the multiple washers has an assembling hole, a peripheral annular recess and two shoulder rims. The assembling hole is disposed at a center of said washer. The peripheral annular recess is disposed at a periphery of the washer. The two shoulder rims are respectively disposed at opposite two sides of the peripheral annular recess. The positioning clips surrounding the corresponding positioning hole of the loading band extend into the peripheral annular recess of the corresponding washer. The two shoulder rims of said washer and the corresponding positioning clips hold and limit each other in position. Each one of the multiple screws is mounted through the assembling hole of a respective one of the multiple washers. The personnel can swiftly take the screws from the collated-screw-band assembly to screw and fasten them, thereby increasing working efficiency.

However, each one of the screws is held on the loading band by the two shoulder rims of the corresponding washer and the corresponding positioning clips holding and limiting each other in position, so a weight of said screw is carried only by the corresponding washer and the corresponding positioning clips. When the collated-screw-band assembly drops or is impacted when in use, the positioning clips of the loading band and the corresponding washer are prone to deform under impact, causing the screw and the washer to detach from the loading band and drop all over.

Such conventional collated-screw-band assembly is known from EP 3 757 407 A1.

The main objective of the present invention is to provide a collated-screw-band assembly to resolve shortcomings that when a conventional collated-screw-band assembly drops or is impacted, screws and washers of the collated-screw-band assembly are prone to be detached and drop.

A collated-screw-band assembly according to claim 1 is provided.

The collated-screw-band assembly comprises a loading band, multiple shoulder washers, and multiple screws. The loading band comprises multiple positioning hole sets spaced linearly at intervals. Each one of the multiple positioning hole sets comprises a positioning hole and multiple positioning clips disposed around the positioning hole and being bendable. Each one of the multiple shoulder washers is mounted at a respective one of the multiple positioning hole sets of the loading band and comprises an annular body, a limiting rim, and a peripheral annular recess. The annular body has an assembling hole disposed at a center of the annular body. The limiting rim extends outwardly from an outer surface and a bottom side of the annular body. The peripheral annular recess is formed at a periphery of the annular body and is disposed on top of the limiting rim. The multiple shoulder washers are respectively mounted at the positioning hole of the corresponding positioning hole set of the loading band. In each one of the multiple shoulder washers, the annular body is mounted through the positioning hole of the corresponding positioning hole set of the loading band. In each one of the positioning hole sets, the multiple positioning clips extend into the peripheral annular recess of the corresponding shoulder washer and abut the limiting rim of said shoulder washer. The multiple screws are connected to the multiple shoulder washers respectively. Each one of the multiple screws comprises a head portion and a rod portion connected to the head portion. The rod portion is tightly mounted through the assembling hole of the corresponding shoulder washer. The head portion of said screw and the limiting rim of the corresponding shoulder washer clamp the loading band.

The loading band of the collated-screw-band assembly is configured to arrange the screws and the shoulder washers in a line to facilitate the personnel to swiftly take the screws for fastening. In addition, the limiting rim of one of the multiple shoulder washers and the head portion of the screw corresponding to said shoulder washer clamp and abut the multiple positioning clips surrounding the corresponding positioning hole of the loading band. So, when the collated-screw-band assembly drops or is impacted, an impact force can be distributed, thus to prevent the screws and the shoulder washers from detaching from the loading band, thereby increasing mounting stability of the screws and the shoulder washers at the loading band.

Furthermore, when assembling the collated-screw-band assembly, the multiple shoulder washers are linearly spaced apart at intervals and mounted at an external positioning tool. Then, the loading band is put on the multiple shoulder washers, so the annular body of each one of the multiple shoulder washers extends into the corresponding positioning hole of the loading band. Next, the rod portion of each one of the multiple screws is mounted through the assembling hole of the corresponding shoulder washer, and the head portion of said screw and the limiting rim of said shoulder washer clamp the positioning clips surrounding the corresponding positioning hole of the loading band.

Therefore, when assembling the multiple shoulder washers and the multiple screws to the loading band of the collated-screw-band assembly, the multiple shoulder washers do not need to be pressed into the positioning holes of the multiple positioning hole sets to be mounted on the loading band. Hence, when assembling, the multiple positioning clips of the loading band are effectively prevented from bending due to press-to-mount operations, thereby lowering assembling complexity.

### IN THE DRAWINGS:

Fig. 1 is an exploded perspective view of an embodiment of a collated-screw-band assembly in accordance with the present invention;
Fig. 2 is a perspective view of a shoulder washer of the collated-screw-band assembly in Fig. 1;
Fig. 3 is a side view of the shoulder washer in Fig. 2; and
Fig. 4 is a sectional side view of the collated-screw-band assembly in Fig. 1.

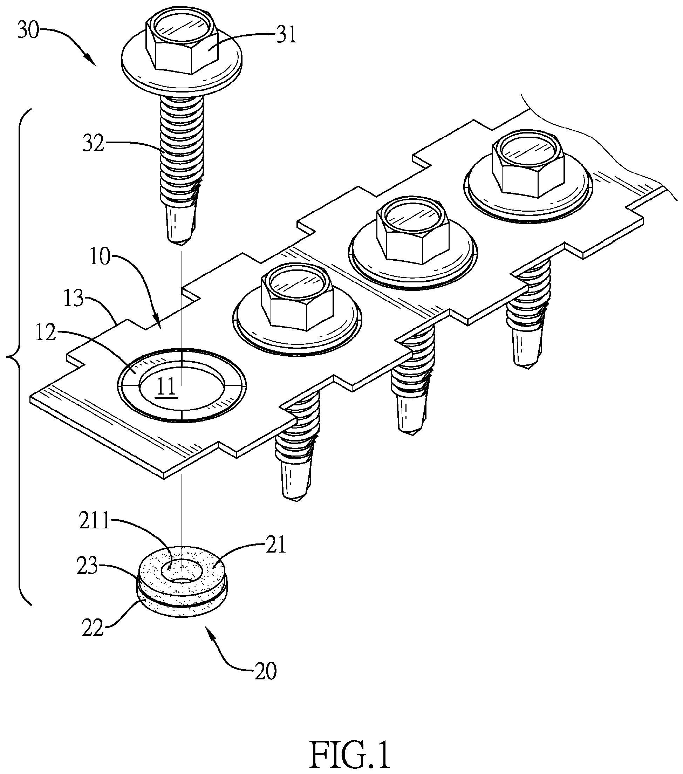

With reference to Fig. 1, an embodiment of a collated-screw-band assembly in accordance with the present invention comprises a loading band 10, multiple shoulder washers 20, and multiple screws 30.

As shown in Fig. 1, the loading band 10 comprises multiple positioning hole sets spaced linearly at intervals. Each one of the multiple positioning hole sets comprises a positioning hole 11 and multiple positioning clips 12. The multiple positioning clips 12 surround the positioning hole 11 and are bendable. Additionally, each one of the multiple positioning hole sets has two tooth portions 13. The two tooth portions 13 are respectively disposed at two opposite sides of the positioning hole 11. Besides, the loading band 10 is made of paper-based materials, such as paper, cardboard, etc.

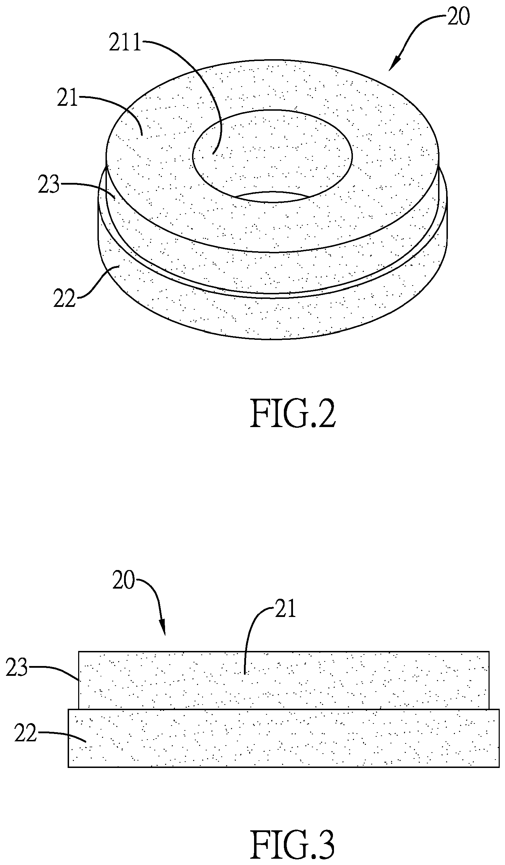

As shown in Figs. 1 to 4, the multiple shoulder washers 20 are respectively mounted at the multiple positioning hole sets of the loading band 10. Each one of the multiple shoulder washers 20 comprises an annular body 21, a limiting rim 22, and a peripheral annular recess 23. The annular body 21 has an assembling hole 211 disposed at a center of the annular body 21. The limiting rim 22 extends outwardly from an outer surface and a bottom side of the annular body 21. The peripheral annular recess 23 is formed at a periphery of the annular body 21 and is disposed on top of the limiting rim 22. The annular body 21 of each one of the multiple shoulder washers 20 is mounted through the positioning hole 11 of the corresponding positioning hole set of the loading band 10. In each one of the positioning hole sets, the multiple positioning clips 12 extend into the peripheral annular recess 23 of the corresponding shoulder washer 20 and abut the limiting rim 22 of said shoulder washer 20. Besides, the multiple shoulder washers 20 are made of elastic materials, such as rubber, silicone, nylon, etc.

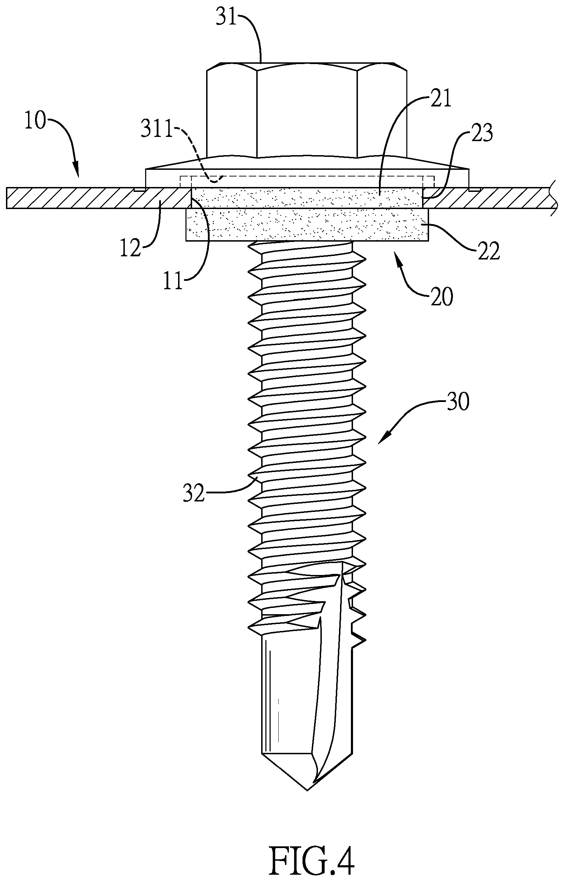

As shown in Figs. 1 and 4, the multiple screws 30 are connected to the multiple shoulder washers 20 respectively. Each one of the multiple screws 30 comprises a head portion 31 and a rod portion 32 connected to the head portion 31. The rod portion 32 is tightly mounted through the assembling hole 211 of the corresponding shoulder washer 20. The head portion 31 of said screw 30 and the limiting rim 22 of the corresponding shoulder washer 20 clamp the loading band 10.

As shown in Fig. 4, a type of the head portion 31 of each one of the multiple screws 30 of the collated-screw-band assembly is chosen based on needs. In a preferable embodiment of the collated-screw-band assembly, each one of the multiple screws 30 has an indentation 311 formed at a bottom end of the head portion 31. The rod portion 32 of said screw 30 extends into the indentation 311 and connects the head portion 31, so the indentation 311 is annular. The annular body 21 of each one of the multiple shoulder washers 20 extends into the indentation 311 of the head portion 31 of the corresponding screw 30.

As shown in Fig. 4, when using the collated-screw-band assembly, the personnel push the head portion 31 of one of the multiple screws 30 to force the multiple positioning clips 12 corresponding to said screw 30 on the loading band 10 to bend. So, an inner diameter of the corresponding positioning hole 11 surrounded by the multiple positioning clips 12 is widened, and the head portion 31 of said screw 30 can pass through said positioning hole 11. Therefore, the multiple screws 30 and the multiple shoulder washers 20 can be swiftly removed, increasing convenience for the personnel to use the screws 30. Additionally, the multiple tooth portions 13 of the loading band 10 facilitate the collated-screw-band assembly to be used with an external automatic screw-feeding device.

Besides, as shown in Fig. 4, the limiting rim 22 of one of the multiple shoulder washers 20 and the head portion 31 of the screw 30 corresponding to said shoulder washer 20 clamp and abut the multiple positioning clips 12 surrounding the corresponding positioning hole 11 of the loading band 10. So, when the collated-screw-band assembly drops or is impacted, an impact force can be distributed to the multiple shoulder washers 20 and the multiple screws 30. Therefore, the multiple screws 30 and the multiple shoulder washers 20 are prevented from being detached from the loading band 10, thereby increasing mounting stability of the multiple screws 30 and the multiple shoulder washers 20 at the loading band 10.

Additionally, as shown in Fig. 1, when assembling the collated-screw-band assembly, the multiple shoulder washers 20 are linearly spaced apart at intervals and mounted at an external positioning tool. Then, the loading band 10 is put on the multiple shoulder washers 20 so the annular body 21 of each one of the multiple shoulder washers 20 extends into the corresponding positioning hole 11 of the loading band 10. Next, the rod portion 32 of each one of the multiple screws 30 is mounted through the assembling hole 211 of the corresponding shoulder washer 20, and the head portion 31 of said screw 30 and the limiting rim 22 of said shoulder washer 20 clamp the positioning clips 12 surrounding the positioning hole 11 of the loading band 10.

Therefore, when assembling the multiple shoulder washers 20 and the multiple screws 30 to the loading band 10 of the collated-screw-band assembly, the multiple shoulder washers 20 do not need to be respectively pressed and forced into the corresponding positioning hole 11 to be mounted on the loading band 10. Hence, during assembly, the multiple positioning clips 12 of the loading band 10 are effectively prevented from bending due to press-to-mount operations, thereby lowering assembling complexity.

To sum up, in the collated-screw-band assembly, each one of the multiple screws 30 and the corresponding shoulder washer 20 clamp the corresponding positioning clips 12. So, when the collated-screw-band assembly drops or is impacted, the multiple screws 30 and the multiple shoulder washers 20 distribute the impact force to prevent the multiple screws 30 and the multiple shoulder washers 20 from detaching from the loading band 10, thereby increasing the mounting stability of the screws 30 and the shoulder washers 20 at the loading band 10. When assembling the collated-screw-band assembly, pressing the shoulder washers 20 to assemble is avoided, thereby further lowering the assembling difficulty of the collated-screw-band assembly.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A collated-screw-band assembly comprising:
a loading band (10) comprising
multiple positioning hole sets spaced linearly at intervals, and each one of the positioning hole sets comprising
a positioning hole (11); and
multiple positioning clips (12) surrounding the positioning hole (11) and being bendable;
multiple shoulder washers (20) respectively mounted at the multiple positioning hole sets of the loading band (10); each one of the multiple shoulder washers (20) comprising
an annular body (21) having
an assembling hole (211) disposed at a center of the annular body (21);
a limiting rim (22) extending outwardly from an outer surface and a bottom side of the annular body (21);
a peripheral annular recess (23) formed at a periphery of the annular body (21) and disposed on top of the limiting rim (22);
in each one of the multiple shoulder washers (20), the annular body (21) mounted through the positioning hole (11) of the corresponding positioning hole set of the loading band (10);
in each one of the positioning hole sets, the multiple positioning clips (12) extending into the peripheral annular recess (23) of the corresponding shoulder washer (20) and abutting the limiting rim (22) of said shoulder washer (20);
multiple screws (30) connected to the multiple shoulder washers (20) respectively; each one of the multiple screws (30) comprising
a rod portion (32) tightly mounted through the assembling hole (211) of the corresponding shoulder washer (20);
a head portion (31) connected to the rod portion (32); **characterized in that** the head portion (31) of said screw (30) and the limiting rim (22) of the corresponding shoulder washer (20) clamp the loading band (10).

2. The collated-screw-band assembly as claimed in claim 1, wherein each one of the positioning hole sets comprises
two tooth portions (13) respectively disposed at two opposite sides of the positioning hole (11).

3. The collated-screw-band assembly as claimed in claim 1 or 2, wherein each one of the multiple screws (30) has an indentation (311) formed at a bottom end of the head portion (31).

4. The collated-screw-band assembly as claimed in any one of claims 1 to 3, wherein the multiple shoulder washers (20) are made of elastic materials.

5. The collated-screw-band assembly as claimed in claim 4, wherein the multiple shoulder washers (20) are made of rubber, silicone, or nylon.

6. The collated-screw-band assembly as claimed in any one of claims 1 to 5, wherein the loading band (10) is made of paper-based materials.

## Patentansprüche

1. Magazinierte Schraubenband-Anordnung, umfassend:
ein Zuführband (10), umfassend
mehrere Positionierungsöffnungsgruppen, die linear beabstandet sind, und jede der Positionierungsöffnungsgruppe umfasst
eine Positionierungsöffnung (11); und
mehrere Positionierungsclips (12), die die Positionierungsöffnung (11) umgeben und biegbar sind;
mehrere Bundscheiben (20), die jeweils an den mehreren Positionierungsöffnungsgruppe des Zuführbandes (10) eingesetzt sind; wobei jede der mehreren Bundscheiben (20) umfasst
einen ringförmigen Körper (21) mit
einer Montageöffnung (211), das in der Mitte des ringförmigen Körpers (21) angeordnet ist;
einen Begrenzungsrand (22), der sich von einer Außenfläche und einer Unterseite des ringförmigen Körpers (21) nach außen erstreckt;
eine umlaufende ringförmige Aussparung (23), die an einem Umfang des ringförmigen Körpers (21) ausgebildet und oberhalb des Begrenzungsrandes (22) angeordnet ist;
wobei in jeder der mehreren Bundscheiben (20) der ringförmige Körper (21) durch die Positionierungsöffnung (11) der entsprechenden Positionierungsöffnungsgruppe des Zuführbandes (10) eingesetzt ist;
wobei sich in jeder der Positionierungsöffnungsgruppen die mehreren Positionierungsclips (12) in die umlaufende ringförmige Aussparung (23) der entsprechenden Bundscheibe (20) erstrecken und an den Begrenzungsrand (22) der Bundscheibe (20) angrenzen;
mehrere Schrauben (30), die jeweils mit den mehreren Bundscheiben (20) verbunden sind; wobei jede der mehreren Schrauben (30) umfasst
einen Schaftabschnitt (32), der fest durch die Montageöffnung (211) der entsprechenden Bundscheibe (20) eingesetzt ist;
einen Kopfabschnitt (31), der mit dem Schaftabschnitt (32) verbunden ist;
**dadurch gekennzeichnet, dass**
der Kopfabschnitt (31) der Schraube (30) und der Begrenzungsrand (22) der entsprechenden Bundscheibe (20) das Zuführband (10) klemmen.

2. Magazinierte Schraubenband-Anordnung nach Anspruch 1, wobei jede der Positionierungsöffnungsgruppen umfasst
zwei Zahnabschnitte (13), die jeweils an zwei gegenüberliegenden Seiten der Positionierungsöffnung (11) angeordnet sind.

3. Magazinierte Schraubenband-Anordnung nach Anspruch 1 oder 2, wobei jede der mehreren Schrauben (30) eine Vertiefung (311) aufweist, die an einem unteren Ende des Kopfabschnitts (31) ausgebildet ist.

4. Magazinierte Schraubenband-Anordnung nach einem der Ansprüche 1 bis 3, wobei die mehreren Bundscheiben (20) aus elastischen Materialien hergestellt sind.

5. Magazinierte Schraubenband-Anordnung nach Anspruch 4, wobei die mehreren Bundscheiben (20) aus Gummi, Silikon oder Nylon hergestellt sind.

6. Magazinierte Schraubenband-Anordnung nach einem der Ansprüche 1 bis 5, wobei das Zuführband (10) aus papierbasierten Materialien hergestellt ist.

## Revendications

1. Ensemble de bande à vis assemblées comprend:
une bande de chargement (10) comprenant
plusieurs jeux de trous de positionnement espacés linéairement à intervalles réguliers, et chacun des jeux de trous de positionnement comprenant
un trou de positionnement (11); et
plusieurs clips de positionnement (12) entourant le trou de positionnement (11) et pouvant être pliés;
plusieurs rondelles à épaulement (20) montées respectivement au niveau des multiples ensembles de trous de positionnement de la bande de chargement (10); chacune des multiples rondelles à épaulement (20) comprenant
un corps annulaire (21) comportant un trou d'assemblage (211) disposé au centre
du corps annulaire (21); un rebord de limitation (22) s'étendant vers l'extérieur à partir d'une surface extérieure et d'un côté inférieur du corps annulaire (21);
un évidement annulaire périphérique (23) formé à la périphérie du corps annulaire (21) et disposé au-dessus du rebord de limitation (22);
dans chacune des multiples rondelles à épaulement (20), le corps annulaire (21) étant monté à travers le trou de positionnement (11) de l'ensemble de trous de positionnement correspondant de la bande de chargement (10);
dans chacun des ensembles de trous de positionnement, les multiples clips de positionnement (12) s'étendant dans le renfoncement annulaire périphérique (23) de la rondelle à épaulement correspondante (20) et venant en butée contre le rebord de limitation (22) de ladite rondelle à épaulement (20);
plusieurs vis (30) reliées respectivement aux multiples rondelles à épaulement (20); chacune des multiples vis (30) comprenant une partie de tige (32) montée de manière serrée à travers le trou d'assemblage (211) de la rondelle à épaulement correspondante (20);
une partie de tête (31) reliée à la partie de tige (32) **caractérisé en ce que** la partie de tête (31) de ladite vis (30) et le rebord de limitation (22) de la rondelle à épaulement correspondante (20) serrant la bande de chargement (10).

2. Ensemble de bande à vis assemblées selon la revendication 1, dans lequel chacun des ensembles de trous de positionnement comprend deux parties dentées (13) disposées respectivement sur deux côtés opposés du trou de positionnement (11).

3. Ensemble de bande à vis assemblées selon la revendication 1 ou 2, dans lequel chacune des multiples vis (30) comporte une indentation (311) formée à une extrémité inférieure de la partie de tête (31).

4. Ensemble de bande à vis assemblées selon l'une quelconque des revendications 1 à 3, dans lequel les multiples rondelles à épaulement (20) sont réalisées en matériaux élastiques.

5. Ensemble de bande à vis assemblées selon la revendication 4, dans lequel les multiples rondelles à épaulement (20) sont constituées de caoutchouc, de silicone ou de nylon.

6. Ensemble de bande à vis assemblées selon l'une quelconque des revendications 1 à 5, dans lequel la bande de chargement (10) est constituée de matériaux à base de papier.
